# EUROPEAN PATENT SPECIFICATION

(11) **EP 3 093 785 B1**
(45) Date of publication and mention of the grant of the patent: **30.03.2022**
(21) Application number: 16156234.3
(22) Date of filing: 18.02.2016
(51) Int. Cl.: G06F 21/42, H04L 29/06

(54) **DATA TRANSMISSION SYSTEM, DATA TRANSMISSION APPARATUS, DATA TRANSMISSION METHOD, AND PROGRAM**
DATENÜBERTRAGUNGSSYSTEM, DATENÜBERTRAGUNGSVORRICHTUNG, DATENÜBERTRAGUNGSVERFAHREN UND PROGRAMM
SYSTÈME DE TRANSMISSION DE DONNÉES, APPAREIL DE TRANSMISSION DE DONNÉES, PROCÉDÉ DE TRANSMISSION DE DONNÉES ET PROGRAMME

(30) Priority: 15.05.2015 JP 2015100269
(43) Date of publication of application: 16.11.2016
(73) Proprietor: FUJIFILM Business Innovation Corp., Minato-ku Tokyo (JP)
(72) Inventor: ITO, Yasuhiro, Yokohama-shi, Kanagawa (JP)
(74) Representative: Haseltine Lake Kempner LLP

(56) References cited:
- EP-A1- 1 480 100
- WO-A1-2004/055684
- WO-A1-2012/045908
- JP-A- 2009 251 636
- US-A1- 2006 010 324
- US-B1- 7 650 509

## Description

### BACKGROUND

### 1. Technical Field

The present invention relates to a data transmission system, a data transmission apparatus, a data transmission method, and a program.

### 2. Related Art

Patent Literature 1 (JP-A-2001-134612) discloses a technique that generates a uniform resource locator (URL) and a password for access to an electronic document, and transmits the URL and the password to a user (a reader). Patent Literature 2 (JP-A-2009-251636) discloses a technique that transmits the URL of a webpage requesting notification of the password to the user by email in a case where a user is not logged in continuously for a predetermined period or longer, and transmits the password of the user by email in a case where the notification of the password is requested from the user in the webpage.

WO 2012/045908 A1 discloses an arrangement for controlling access to a network service, wherein a network access server notifies a user via email of a unique, one-time URI for accessing a network service or data. Similarly, WO 2004/055684 A1 discloses a password notification method wherein a URL and an access key are transmitted via two separate emails to the user.

US 7 650 509 B1 is directed at a password authentication mechanism that is capable of determining whether a password has expired by using additional information encoded into the password.

### SUMMARY

In a system that releases data to a specific user as a target, in order to improve security, the access to the data may be limited until password information is input or data may be encrypted using the password information. In this case, it is necessary to notify the password information for using the data to the user to which data is to be released as a destination of the data (hereinafter, referred to as a person to which data is to be released).

Here, if the password information is transmitted together with storage site information representing a storage site of the data, there is a concern that a malicious third party illicitly obtains (steals) the transmitted contents, and easily specifies the storage site of the data and the password information. In this regard, it is considered that the password information is separately transmitted after the storage site information has been transmitted. On the other hand, it is also considered that the user does not use the transmitted password information for a long time instead of obtaining the data using the transmitted password information. In this case, since a malicious third party can view the transmitted contents, and specify the storage site of the data and the password information, it can be said that security is insufficient in this way.

In view of above, an object of the invention is to improve security regarding the access to the data compared to a case where the password information of the data is transmitted regardless of the access accompanied with the storage site information of the data.
[1] An aspect of the invention provides a data transmission system including a storage site information transmitter, an access acceptor, and a password information transmitter. The storage site information transmitter transmits storage site information representing a storage site of data to a certain destination. The access acceptor accepts an access accompanied with the storage site information. The password information transmitter transmits, in a case where the access accompanied with the storage site information is accepted, password information for using the data to the destination.
[2] It may be data transmission system according to [1], in which the access accompanied with the storage site information is an access to the storage site information or an access to an instructing unit that provides an instruction to obtain the data by using the storage site information.
[3] It may be data transmission system according to [1] or [2], in which the password information is information that is necessary to permit transmission of the data to the destination.
[4] It may be data transmission system according to any one of [1] to [3], in which the password information is information that is necessary to decrypt the data that has been encrypted.
[5] It may be data transmission system according to any one of [1] to [4], in which the storage site information represents a uniform resource locator of a website which is a storage site of the data, the access acceptor accepts an access to the website, and the password information transmitter transmits, in a case where the access to the website is accepted, password information for using the data to the destination.
[6] It may be data transmission system according to [3], further including: an expiration date and time setter that sets an expiration date and time of the password information transmitted by the password information transmitter; and a transmission limiter that limits transmission of the data in a case where a date and time when transmission of the data is requested is after the expiration date and time of the password information that is used for permitting transmission of the data.
[7] It may be data transmission system according to [3], further including: a password information invalidating unit that invalidates, in a case where the data has been transmitted, the password information related to the data; and a transmission limiter that limits transmission of the data in a case where the password information related to the data has been invalidated.
[8] It may be data transmission system according to any one of [1] to [7], further including: a password information generator that newly generates the password information in a case where the access accompanied with the storage site information is accepted, in which the password information transmitter transmits the password information newly generated by the password information generator to the destination.
[9] It may be data transmission system according to any one of [1] to [8], in which the password information transmitter transmits, together with the password information, information representing a date and time when the access accompanied with the storage site information is accepted to the destination.
[10] Another aspect of the invention provides a data transmission apparatus including: a storage site information transmitter that transmits storage site information representing a storage site of data to a certain destination; an access acceptor that accepts an access accompanied with the storage site information; and
   a password information transmitter that transmits, in a case where the access accompanied with the storage site information is accepted, password information for using the data to the destination.
[11] Another aspect of the invention provides a data transmission method including: transmitting storage site information representing a storage site of data to a certain destination; accepting an access accompanied with the storage site information; and transmitting, in a case where the access accompanied with the storage site information is accepted, password information for using the data to the destination.
[12] A program causing a computer to function as: a storage site information transmitter that transmits storage site information representing a storage site of data to a certain destination; an access acceptor that accepts an access accompanied with the storage site information; and a password information transmitter that transmits, in a case where the access accompanied with the storage site information is accepted, password information for using the data to the destination.

According to the data transmission system of [1] and the data transmission method of [11], it is possible to improve security regarding the access to the data, compared to a case where the password information of the data is transmitted regardless of the access accompanied with the storage site information of the data.

According to the data transmission system of [2], it is possible to improve security regarding the access to the data, compared to a case where the password information of the data is transmitted regardless of the access to the storage site information or the access to an instructing unit that provides an instruction to obtain the data by using the storage site information.

According to the data transmission system of [3], the person to which data is to be released can easily specify the password information that is necessary for the data transmission.

According to the data transmission system of [4], the person to which data is to be released can easily specify the password information that is necessary to decrypt the encrypted data.

According to the data transmission system of [5], the person to which data is to be released can easily specify the password information for using the data, in a case where the access to the website which is the storage site of the data is accepted.

According to the data transmission system of [6], it is possible to improve security compared to a case where an expiration date and time is not set to the password information.

According to the data transmission system of [7], it is possible to improve security compared to a case where the password information related to the transmitted data has not been invalidated.

According to the data transmission system of [8], it is possible to generate new password information every time the access to the data using the storage site information is accepted.

According to the data transmission system of [9], the person to which data is to be released can more easily specify the password information for using the data, compared to a case where a date and time when the access accompanied with the storage site information is accepted to the destination is not transmitted.

According to the data transmission apparatus of [10], it is possible to improve security regarding the access to the data, compared to a case where the password information of the data is transmitted regardless of the access accompanied with the storage site information of the data.

According to the program of [12], it is possible to improve security regarding the access to the data by using a computer, compared to a case where the password information of the data is transmitted regardless of the access accompanied with the storage site information of the data.

### BRIEF DESCRIPTION OF THE DRAWINGS

Exemplary embodiments of the present invention will be described in detail based on the following figures, wherein:
Fig. 1 is a diagram illustrating an example of the configuration of a data transmission system according to a first exemplary embodiment;
Fig. 2 is a functional block diagram illustrating an example of the functional configuration of the data transmission system according to the first exemplary embodiment;
Fig. 3 is a diagram illustrating an example in which a data manager stores data;
Fig. 4 is a diagram illustrating an example of webpage data that is displayed when an access is accepted;
Fig. 5 is a flowchart illustrating an example of processing performed in the data transmission system according to the first exemplary embodiment;
Fig. 6 is a functional block diagram illustrating an example of the functional configuration of a data transmission system according to a second exemplary embodiment; and
Fig. 7 is a flowchart illustrating an example of processing performed in the data transmission system according to the second exemplary embodiment.

### DETAILED DESCRIPTION

Hereinafter, an exemplary embodiment of the present invention will be described with reference to the attached drawings. In each figure of the attached drawings, the same elements as those that have already been described are denoted by the same reference numerals and the detailed description thereof will be omitted.

### 1. First Exemplary Embodiment

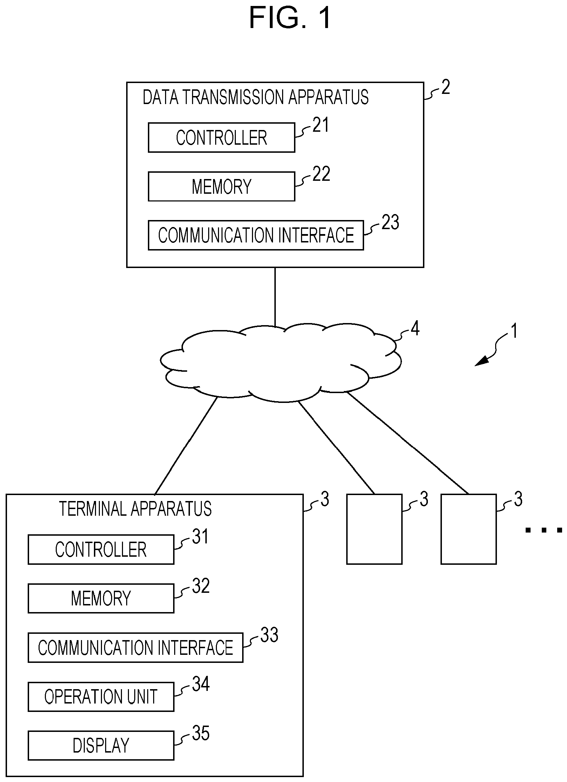

First, a data transmission system 1 according to a first exemplary embodiment of the present invention will be described with reference to Figs. 1 to 5.

### 1-1. System Configuration

Fig. 1 is a diagram illustrating an example of the configuration of the data transmission system 1 according to the first exemplary embodiment. As illustrated in Fig. 1, the data transmission system 1 includes a data transmission apparatus 2 and plural terminal apparatuses 3. The data transmission apparatus 2 and the terminal apparatuses 3 are connected to each other via a communication network 4 such as the Internet. The number of terminal apparatuses 3 included in the data transmission system 1 may be one.

The data transmission apparatus 2 is a computer that includes a controller 21 such as a microprocessor, a memory 22 such as a random access memory (RAM) and a hard disk, and a communication interface 23. The data transmission apparatus 2 transmits data to the terminal apparatus 3 used by a user. In this exemplary embodiment, the data transmission apparatus 2 transmits data in a case where password information input by the user matches password information that is stored in association with the data. Control is performed so that the data is not transmitted in a case where password information is not input or in a case where password information that has been input is wrong.

Each of the terminal apparatuses 3 is, for example, a personal computer, a tablet terminal, or a mobile phone used by a user, and includes a controller 31 such as a microprocessor, a memory 32 such as a RAM and a hard disk, a communication interface 33, an operation unit 34 such as a mouse, a keyboard, and a touch panel for accepting input from a user, and a display 35 such as a display device. In this exemplary embodiment, the terminal apparatus 3 receives password information for data from the data transmission apparatus 2 and obtains the data from the data transmission apparatus 2 by using the password information.

### 1-2. Functional Blocks of Data Transmission Apparatus

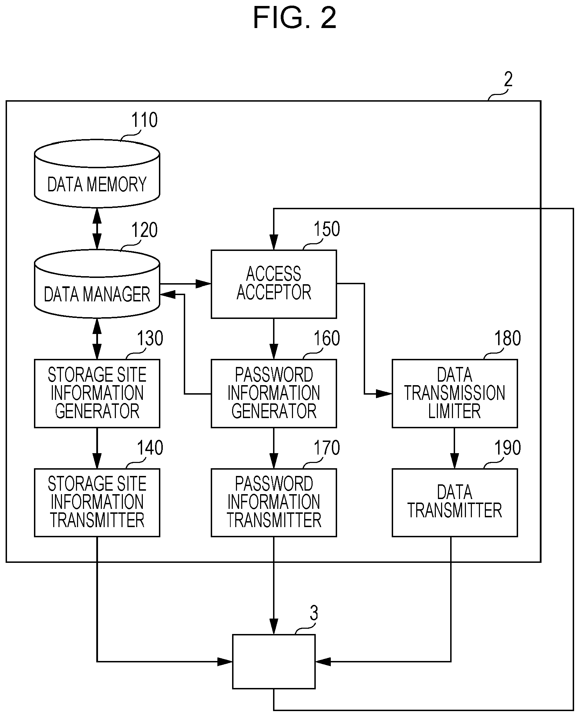

Fig. 2 is a functional block diagram illustrating an example of the functional configuration of the data transmission system 1 according to the first exemplary embodiment. As illustrated in Fig. 2, the data transmission system 1 functionally includes a data memory 110, a data manager 120, a storage site information generator 130, a storage site information transmitter 140, an access acceptor 150, a password information generator 160, a password information transmitter 170, a data transmission limiter 180, and a data transmitter 190. These functions are implemented when the controller 21 of the data transmission apparatus 2 executes a program stored in the memory 22 of the data transmission apparatus 2. The program may be provided via the communication interface 23 of the data transmission apparatus 2 or may be provided by being stored in a storage medium such as a compact disc read only memory (CD-ROM).

### 1-2-1. Data Memory

The data memory 110 stores data that is to be released to a user (a person to which data is to be released). In this exemplary embodiment, the data memory 110 also functions as a storage site for storing a website including data to be released. In this exemplary embodiment, the data memory 110 is implemented by the memory 22 of the data transmission apparatus 2. Alternatively, the data memory 110 may be implemented by a computer or an external storage device different from the data transmission apparatus 2.

### 1-2-2. Data Manager

The data manager 120 manages data stored in the data memory 110 and various pieces of information associated with the data. Specifically, the data manager 120 stores data transmitted from the terminal apparatus 3 in the data memory 110 and also stores, in association with the data, destination information transmitted together with the data and storage site information and password information generated for the data. The data manager 120 may be implemented by the controller 21 and the memory 22 of the data transmission apparatus 2.

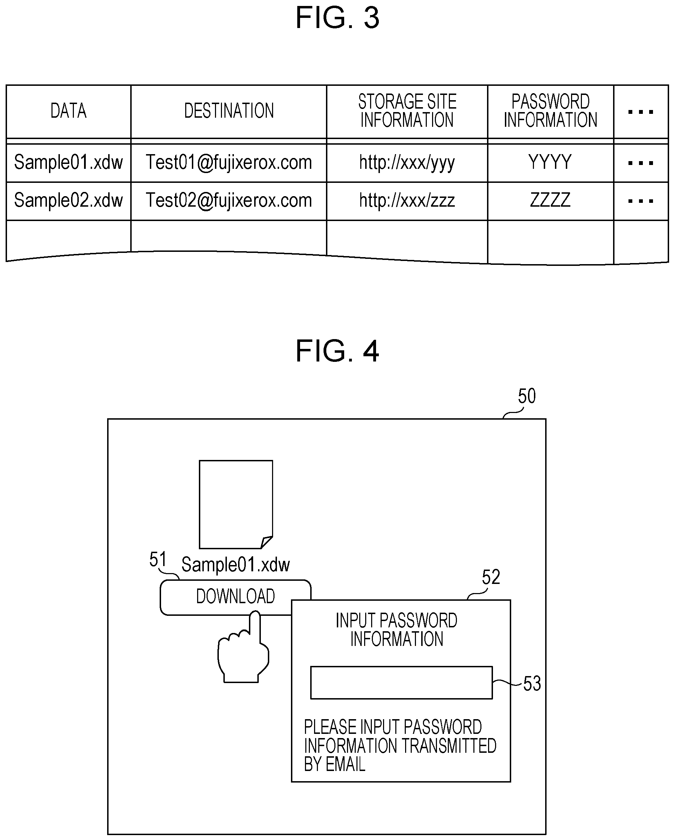

Fig. 3 is a diagram illustrating an example in which the data manager 120 stores data. As illustrated in Fig. 3, the data manager 120 stores destination information in association with individual pieces of data. In this exemplary embodiment, the data manager 120 stores email addresses of persons to which data is to be released as the destinations of the data. The destination information may be transmitted to the data transmission apparatus 2 by being attached with data transmitted from the terminal apparatus 3. Alternatively, a destination may be set by a user who wants to release data to another user by using his/her own terminal apparatus 3.

Also, the data manager 120 stores, in association with the individual pieces of data, storage site information representing the storage sites of the individual pieces of data in the data memory 110. In this exemplary embodiment, the storage site information is generated by the storage site information generator 130 which will be described below.

Also, the data manager 120 stores, in association with the individual pieces of data, password information for using the individual pieces of data. In this exemplary embodiment, the password information is a character string generated by the password information generator 160 which will be described below. Alternatively, the data manger 120 may store password information set by a data releasing side or predetermined password information. In this case, the data transmission system 1 does not necessarily include the password information generator 160.

### 1-2-3. Storage Site Information Generator

The storage site information generator 130 generates storage site information representing a storage site of data in the data memory 110. In this exemplary embodiment, the storage site information generator 130 automatically generates a uniform resource locator (URL) of a website on which data is released and webpage data included in the website. The storage site information generator 130 may generate a URL, for example, from random characters or numerals. In this way, it becomes possible to more reliably protect the URL against a third party to which the data is not released. The storage site information generator 130 may be implemented by the controller 21 of the data transmission apparatus 2.

### 1-2-4. Storage Site Information Transmitter

The storage site information transmitter 140 transmits storage site information for data to a given destination. More specifically, the storage site information transmitter 140 transmits a URL of a website, which is storage site information for data, to a destination associated with the data. In this exemplary embodiment, the storage site information transmitter 140 transmits, by email, the URL to an email address of a person to which the data is to be released. The storage site information transmitter 140 may be implemented by the controller 21 and the communication interface 23 of the data transmission apparatus 2.

In this way, the storage site information transmitter 140 transmits the storage site information, and thereby the person to which data is to be released is able to obtain the storage site information for the data. For example, the person to which data is to be released receives an email including character strings to which hyperlinks are set as storage site information and selects storage site information from the received email, and is thereby able to access the website on which the data is released.

### 1-2-5. Access Acceptor

The access acceptor 150 accepts an access accompanied with storage site information from the terminal apparatus 3. More specifically, the access acceptor 150 accepts an access to storage site information or an access to the data transmitter 190 that provides an instruction to obtain data by using the storage site information. The access acceptor 150 may be implemented by the controller 21 and the communication interface 23 of the data transmission apparatus 2.

Fig. 4 is a diagram illustrating an example of webpage data that is displayed when an access is accepted. As illustrated in Fig. 4, when the terminal apparatus 3 accesses a website on which data is released (more specifically, a website of a URL represented by storage site information), webpage data 50 including a download button 51 is displayed on the display 35 of the terminal apparatus 3. Here, if the download button 51 is pressed by a person to which data is to be released, a password information input image 52 that requests input of password information is displayed on the display 35. The person to which data is to be released inputs the password information transmitted from the password information transmitter 170 which will be described below into an input field 53, and thereby becomes able to download the data.

### 1-2-6. Password Information Generator

The password information generator 160 newly generates random password information in a case where an access accompanied with storage site information is accepted from the terminal apparatus 3. In this exemplary embodiment, password information is information that is necessary for the data transmission limiter 180 which will be described below to permit transmission of data, and is constituted by, for example, a combination of random characters and numerals. For example, the password information generator 160 may generate password information in a case where the webpage data 50 illustrated in Fig. 4 is accessed or in a case where the download button 51 is pressed. Here, the data manager 120 stores the password information newly generated for data in association with the data. The password information generator 160 may be implemented by the controller 21 of the data transmission apparatus 2.

The password information generator 160 may generate, every time the access acceptor 150 accepts an access accompanied with storage site information for data, new password information that is different from password information previously generated for the data. In this way, even if the previously generated password information leaks to a third party, the third party is unable to obtain the data by using the previously generated password information.

### 1-2-7. Password Information Transmitter

The password information transmitter 170 transmits password information for using data to a destination (for example, an email address of a person to which data is to be released) in a case where an access accompanied with storage site information is accepted from the terminal apparatus 3. More specifically, the password information transmitter 170 transmits password information that is newly generated by the password information generator 160 to the destination in a case where an access to a website which is the storage site of the data is accepted. The password information transmitter 170 may be implemented by the controller 21 and the communication interface 23 of the data transmission apparatus 2.

The password information transmitter 170 may transmit password information in a case where the webpage data 50 illustrated in Fig. 4 is accessed or in a case where the download button 51 is pressed, for example. In this exemplary embodiment, the password information transmitter 170 transmits the password information generated by the password information generator 160. Also, the password information transmitter 170 may transmit password information set by a data releasing side or predetermined password information.

For example, in a case where the password information illustrated in Fig. 3 is stored in the data manager 120 and in a case where "https://xxx/yyy" is accessed from the terminal apparatus 3, the password information transmitter 170 transmits "YYYY", which is password information generated for data "Sample01.xdw" indicated by the storage site information, to "Test01 @fujixerox.com" by email.

In this way, the password information for the data may be transmitted only to the destination associated with the data (an email address of the person to which data is to be released). Here, the timing at which the password information is transmitted is just after the timing at which the person to which data is to be released actually accesses the storage site of the data. Thus, the person to which data is to be released may easily specify the password information that is necessary to use the data. Further, even if a third party illicitly obtains storage site information for the data, it is difficult for the third party to specify the password information for the data regarding the storage site information because the password information is transmitted after a certain period has elapsed since the timing at which the storage site information is transmitted.

### 1-2-8. Data Transmitter/Data Transmission Limiter

The data transmitter 190 transmits data to the terminal apparatus 3 that has accessed to a storage site of the data. Note that, in a case where transmission of data is limited by the data transmission limiter 180 which will be described below, the data transmitter 190 performs control not to transmit the data. The data transmitter 190 may be implemented by the controller 21 and the communication interface 23 of the data transmission apparatus 2.

The data transmission limiter 180 limits transmission of data performed by the data transmitter 190. In this exemplary embodiment, the data transmission limiter 180 limits transmission of data in a case where password information stored in association with the data is not input (for example, in a case where password information is wrong). The data transmission limiter 180 may be implemented by the controller 21 of the data transmission apparatus 2.

The data transmission limiter 180 limits transmission of data performed by the data transmitter 190 as long as correct password information is not input to the input field 53 of the webpage data 50 illustrated in Fig. 4. In a case where the password information illustrated in Fig. 3 is stored in the data manager 120, the data transmission limiter 180 limits download of the data "Sample01.xdw" by the terminal apparatus 3 as long as the password information "YYYY" is not input from the terminal apparatus 3 that has accessed "https://xxx/yyy". In this way, permission to download the data may be given only to the user related to the destination to which the password information for the data is transmitted (that is, the person to which data is to be released).

### 1-3. Flow of Processing

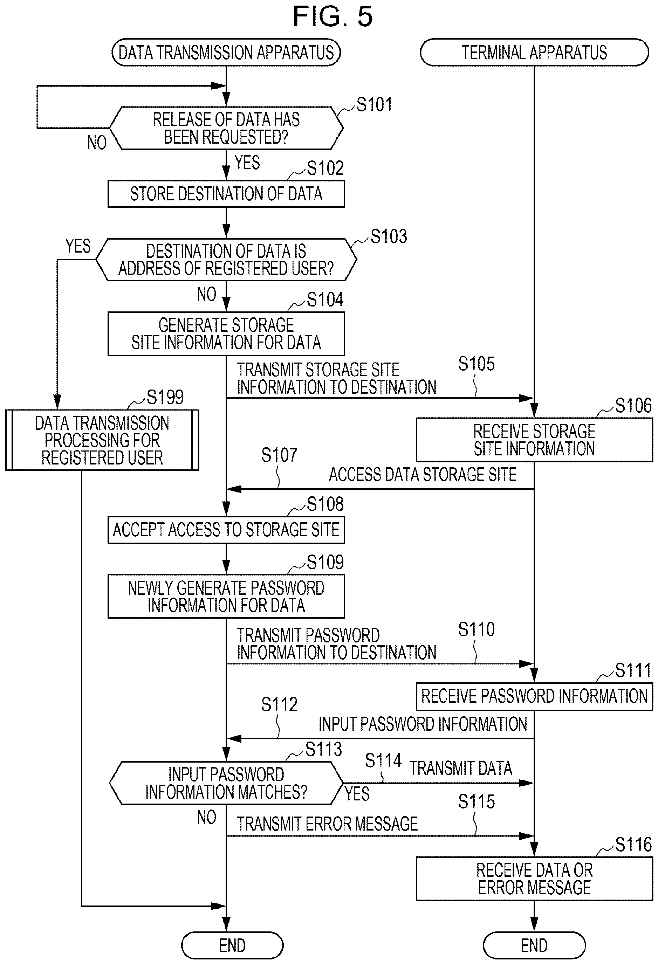

Fig. 5 is a sequence diagram illustrating an example of processing that is performed in the data transmission system 1 according to this exemplary embodiment. As illustrated in Fig. 5, if release of data has been requested by a data releasing side (YES in step S101), the data manager 120 stores a destination to which the data is to be transmitted (for example, an email address of a person to which data is to be released) in association with the data (step S102).

If the destination of the data is an address of a user registered in advance (YES in step S103), the data transmission apparatus 2 may perform data transmission processing for the registered user (step S199) and end the processing. The data transmission processing for the registered user (step S199) may include, for example, login processing based on information input by the user and is processing of transmitting data to the user who has successfully logged in. Note that the above-described steps S103 and S199 may be omitted.

In this exemplary embodiment, a detailed description will be given of a case where an address of an unregistered user (a so-called guest user) is set as a destination of data. In step S103, if the destination of the data is different from the address of the registered user (NO in step S103), the storage site information generator 130 generates storage site information representing the storage site of the data (step S104). The storage site information generator 130 generates, for example, a URL of a website on which the data is released and webpage data constituting the website. At this time, the data manager 120 stores the generated storage site information in association with the data (see Fig. 3).

The storage site information transmitter 140 transmits the storage site information generated in step S104 to the destination associated with the data in step S102 (step S105). The storage site information transmitter 140 transmits, for example, an email attached with password information to the email address of the person to which data is to be released who is associated with the data. The terminal apparatus 3 (more specifically, the controller 31 and the communication interface 33) of the person to which data is to be released receives the transmitted email and thereby receives the storage site information (step S106).

After that, the terminal apparatus 3 accepts an operation of the person to which data is to be released by using the operation unit 34 and thereby accesses the data storage site represented by the storage site information (step S107). For example, the terminal apparatus 3 accesses the website of the URL shown in the email. Accordingly, the webpage data 50 illustrated in Fig. 4 is displayed on the display 35 of the terminal apparatus 3.

The access acceptor 150 accepts an access to the data storage site from the terminal apparatus 3 (step S108). The access acceptor 150 accepts an access to the website from the person to which data is to be released or an input operation for an image (or characters) such as the download button 51 (see Fig. 4).

After the access acceptor 150 has accepted the access, the password information generator 160 newly generates password information for the data regarding storage site information (step S109). At this time, the data manager 120 stores the generated password information in association with the data (see Fig. 3). In a case where predetermined password information (for example, password information set by the data releasing side) has already been stored in the data manager 120, step S109 may be omitted.

The password information transmitter 170 transmits the password information for the data to the destination stored in association with the data (step S110). The password information transmitter 170 transmits, for example, the password information generated in step S109 (or stored in advance) to the email address of the person to which data is to be released, which is the destination of the data, by email. The terminal apparatus 3 of the person to which data is to be released receives the email and thereby receives the transmitted password information for the data (step S111).

The terminal apparatus 3 accepts an input operation performed by the person to which data is to be released and, for example, inputs the transmitted password information into the input field 53 of the webpage data 50 illustrated in Fig. 4 (step S112). The data transmission limiter 180 determines whether or not the input password information matches the password information associated with the data (step S113). If both the pieces of password information match (YES in step S113), the data transmission limiter 180 permits transmission of the data, and the data transmitter 190 transmits the data stored in the storage site to the terminal apparatus 3 (step S114). On the other hand, if both the pieces of password information do not match (NO in step S113), the data transmission limiter 180 limits transmission of the data, and the data transmitter 190 does not transmit the data but transmits an error message indicating that the password information is wrong (step S115).

The terminal apparatus 3 receives the transmitted data or error message (step S116), and the processing ends. That is, even if the data storage site is accessed, download of the data is limited if correct password information is not input.

As described above, in this exemplary embodiment, the timing at which password information for data is transmitted (for example, by email), that is, step S110, comes after a certain period has elapsed since the timing at which storage site information for data is transmitted, that is, step S105. Thus, even if a malicious third party illicitly obtains the storage site information for the data, it is difficult for the third party to specify the password information for the data. Further, the password information is transmitted in a case where an access to the storage site of the data is accepted, and thus the possibility that the password information is not used by the user and leaks to a malicious third party may be decreased.

Further, in this case, the timing at which the password information is transmitted (step S110) is just after the timing at which the person to which data is to be released actually accesses the storage site of the data (step S107), and thus the person to which data is to be released may easily specify the password information that is necessary for obtaining (downloading) the data.

### 2. Second Exemplary Embodiment

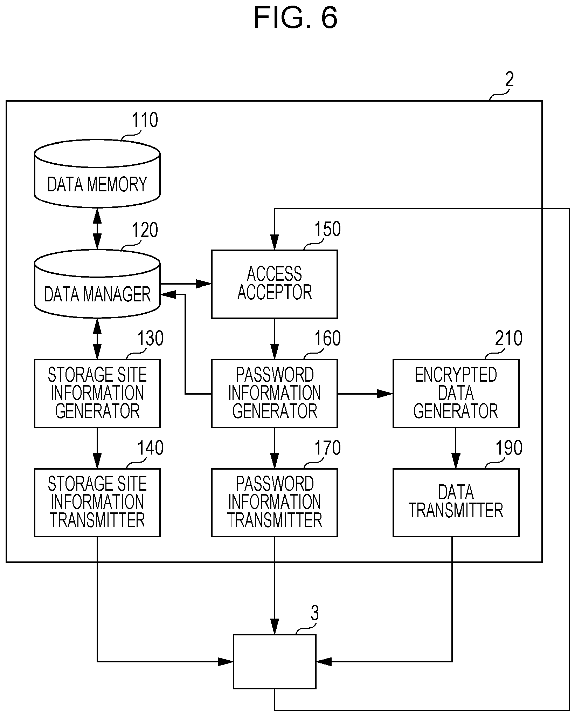

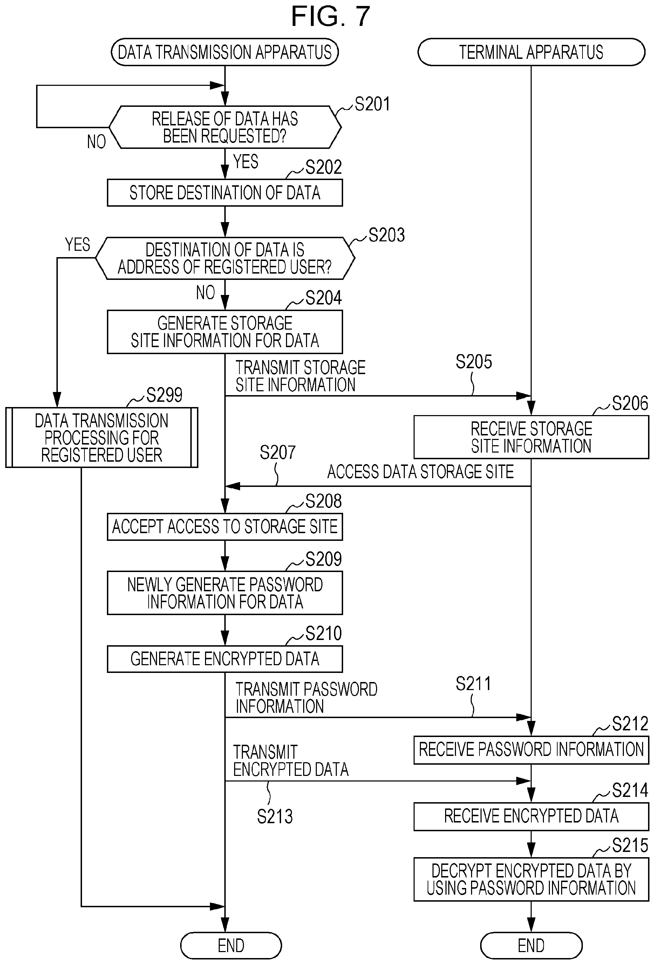

Next, a data transmission system 1 according to a second exemplary embodiment of the present invention will be described with reference to Figs. 6 and 7. The configuration of the data transmission system 1 according to the second exemplary embodiment is the same as that according to the first exemplary embodiment, and thus the description thereof is omitted.

### 2-1. Functional Blocks

Fig. 6 is a functional block diagram illustrating an example of the functional configuration of the data transmission system 1 according to the second exemplary embodiment. The data transmission system 1 according to this exemplary embodiment includes an encrypted data generator 210 instead of the data transmission limiter 180 (see Fig. 2).

The encrypted data generator 210 encrypts data so that password information to be transmitted to a destination serves as a decryption key and thereby generates encrypted data. That is, in the first exemplary embodiment, password information for using data is information that is necessary to permit transmission of data to a destination. On the other hand, in the second exemplary embodiment, password information serves as information that is necessary to decrypt encrypted data. The encrypted data generator 210 may be implemented by the controller 21 of the data transmission apparatus 2.

The data transmitter 190 according to this exemplary embodiment transmits the encrypted data generated by the encrypted data generator 210. Here, the password information serving as a decryption key for decrypting the encrypted data is transmitted only to a destination associated with the data (for example, an email address of a person to which data is to be released). Thus, even if a third party obtains the encrypted data, the third party is unable to decrypt the encrypted data as long as the third party does not specify the password information.

Further, the password information is transmitted to the destination after a certain period has elapsed since the timing at which the storage site information is transmitted. Thus, it is difficult for the third party to specify the password information for the data related to the storage site information, and to decrypt the encrypted data that has been illicitly obtained.

### 2-2. Flow of Processing

Fig. 7 is a sequence diagram illustrating an example of processing that is performed in the data transmission system 1 according to this exemplary embodiment. As in the first exemplary embodiment, if release of data has been requested (YES in step S201), the data transmission apparatus 2 transmits storage site information for the data to a destination (for example, an email address of a person to which data is to be released) in steps S202 to S205. The terminal apparatus 3 of the person to which data is to be released accesses a storage site of the data represented by the received storage site information (steps S206 and S207). The data transmission apparatus 2 accepts the access to the storage site of the data (step S208) and newly generates password information for the data (step S209).

In this exemplary embodiment, encrypted data is generated and transmitted to the terminal apparatus 3 instead of limiting transmission of data. More specifically, the encrypted data generator 210 generates encrypted data that is able to be decrypted by using the password information generated in step S209 (step S210). Here, the password information transmitter 170 transmits the password information to the destination (for example, the email address of the person to which data is to be released) in step S211, and the data transmitter 190 transmits the encrypted data generated in step S210 to the terminal apparatus 3 (step S213). The data transmitter 190 may delete the encrypted data that has been transmitted.

The terminal apparatus 3 receives the password information by email (step S212) and downloads the encrypted data (step S214). The terminal apparatus 3 decrypts the downloaded encrypted data by using the password information received by email in accordance with an operation of the person to which data is to be released (step S215) and obtains available data that is not encrypted.

In this way, also in this exemplary embodiment, as in the first exemplary embodiment, the timing at which the password information for the data is transmitted, for example by email (step S211), comes after a certain period has elapsed since the timing at which the storage site information for the data is transmitted (step S205). Thus, even if a malicious third party illicitly obtains the storage site information for the data, it is difficult for the third party to specify the password information for the data. Further, the password information is transmitted in a case where an access to the storage site of the data is accepted, and thus a possibility that the password information is not used by the user and leaks to the malicious third party may be decreased. Further, the timing at which the password information is transmitted (step S211) is just after the timing at which the person to which data is to be released actually accesses the storage site of the data (step S207), and thus the person to which data is to be released may easily specify the password information that is necessary to decrypt the encrypted data.

The password information transmitter 170 may transmit, together with the password information, information representing a date and time when an access accompanied with storage site information is accepted and information representing software (for example, a browser) used for the access in the terminal apparatus 3 to the destination. For example, the password information transmitter 170 may transmit information representing a date and time when the webpage data 50 illustrated in Fig. 4 is accessed and information representing a date and time when the download button 51 is pressed to the email address of the person to which data is to be released. In this way, the person to which data is to be released may easily specify the data corresponding to the transmitted password information.

### 3. Modification Examples

The first and second exemplary embodiments of the present invention have been described above, but the present invention is not limited to the above-described embodiments. Hereinafter, other embodiments (modification examples) for carrying out the present invention will be described.

### 3-1. First Modification Example

In the first exemplary embodiment, transmission of data is permitted in a case where input password information matches, but an expiration date and time may be set to the password information provided to a person to which data is to be released.

More specifically, the data transmission system 1 may further functionally include an expiration date and time setter that sets an expiration date and time of the password information transmitted by the password information transmitter 170, and the data transmission limiter 180 may limit transmission of data in a case where the date and time when transmission of the data is requested is after the expiration date and time of the password information. The expiration date and time setter may be implemented by the controller 21 of the data transmission apparatus 2.

There is a high probability that the timing at which a third party steals password information on a person to which data is to be released is after a certain period from the timing at which the password information is transmitted. Thus, with an expiration date and time of the password information being set, data leakage to the third party may be prevented.

### 3-2. Second Modification Example

In the first exemplary embodiment, transmission of data is permitted in a case where input password information matches, but the password information for the data may be invalidated after the data is once downloaded.

More specifically, the data transmission system 1 may further functionally include a password information invalidating unit that invalidates password information related to data after the data has been transmitted. In a case where the password information related to the data has been invalidated, the data transmission limiter 180 may limit transmission of the data. The password information invalidating unit may be implemented by the controller 21 of the data transmission apparatus 2.

In this way, once a person to which data is to be released downloads data by using password information, he/she becomes unable to download the data by using the same password information. That is, data leakage to a third party different from the person to which data is to be released may be prevented.

### 3-3. Third Modification Example

In the first exemplary embodiment, password information serves as information that is necessary to permit transmission of data. In the second exemplary embodiment, password information serves as information that is necessary to decrypt encrypted data. These two pieces of password information having different applications may be transmitted to a person to which data is to be released.

In this case, the data transmission system 1 may include both the data transmission limiter 180 (see Fig. 2) and the encrypted data generator 210 (see Fig. 6). Here, in a case where the access acceptor 150 accepts an access accompanied with storage site information from the terminal apparatus 3, the encrypted data generator 210 may generate encrypted data by encrypting data stored in the storage site, and the password information generator 160 may transmit first password information that is necessary to permit transmission of the encrypted data and second password information for decrypting the encrypted data to the destination associated with the data. The data transmission limiter 180 may limit transmission of the encrypted data as long as the first password information is not input.

The person to which data is to be released who has downloaded the encrypted data is able to decrypt the encrypted data by using the second password information and to obtain available data. In this way, with plural pieces of password information that are necessary to obtain available data being provided, the user is able to use the data only after obtaining all the pieces of password information. That is, data leakage to a third party different from the person to which data is to be released may be prevented.

The first password information and the second password information may be common password information (that is, pieces of password information having the same character string or the like). Also in this case, compared to the first exemplary embodiment, the opportunities to input password information to obtain available data increase.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A data transmission system (1) comprising:
a storage site information transmitter (140) that transmits storage site information representing a storage site of data to be encrypted to a certain destination of a person to which data is to be released, the certain destination being that of an unregistered user;
an access acceptor (150) that accepts an access accompanied with the storage site information; and
a password information transmitter (170) that transmits password information, in a case where the access accompanied with the storage site information is accepted, to the destination associated with the data, wherein the password information serves as a decryption key for decrypting the data to be encrypted after the data has been encrypted,
wherein the timing at which the password information for the data is transmitted comes after a certain period has elapsed since the timing at which the storage site information for the data is transmitted and wherein the timing at which the password information is transmitted is just after the timing at which the person to which data is to be released actually accesses the storage site of the data, so that the person to which data is to be released can specify the password information that is necessary to decrypt the encrypted data; the data transmission system further comprising:
a password information generator (160) that newly generates the password information in a case where the access accompanied with the storage site information is accepted, and
an encrypted data generator (210) that, in a case where the access accompanied with the storage site information is accepted and the password information generator (160) newly generates the password information, generates the encrypted data that is able to be decrypted by using the newly generated password information as a decryption key,
wherein the password information transmitter (170) transmits the password information newly generated by the password information generator to the destination.

2. The data transmission system (1) according to Claim 1, wherein the access accompanied with the storage site information is an access to the storage site information or an access to an instructing unit that provides an instruction to obtain the data by using the storage site information.

3. The data transmission system (1) according to Claim 1 or 2, wherein
the storage site information represents a uniform resource locator of a website which is a storage site of the data,
the access acceptor (150) accepts an access to the website, and
the password information transmitter (170) transmits, in a case where the access to the website is accepted, password information for using the data to the destination.

4. The data transmission system (1) according to any one of Claims 1 to 3, wherein the password information transmitter (170) transmits, together with the password information, information representing a date and time when the access accompanied with the storage site information is accepted to the destination.

5. A data transmission method comprising:
transmitting (S105) storage site information representing a storage site of data to be encrypted to a certain destination of a person to which data is to be released, the certain destination being that of an unregistered user;
accepting (S108) an access accompanied with the storage site information; and
transmitting (S110) password information, in a case where the access accompanied with the storage site information is accepted, to the destination associated with the data, wherein the password information serves as a decryption key for decrypting the data to be encrypted after the data has been encrypted,
wherein the timing at which the password information for the data is transmitted comes after a certain period has elapsed since the timing at which the storage site information for the data is transmitted and wherein the timing at which the password information is transmitted is just after the timing at which the person to which data is to be released actually accesses the storage site of the data, so that the person to which data is to be released can specify the password information that is necessary to decrypt the encrypted data; the method further comprising:
newly generating the password information in a case where the access accompanied with the storage site information is accepted, and
in a case where the access accompanied with the storage site information is accepted and the password information is newly generated, generating the encrypted data that is able to be decrypted by using the newly generated password information as a decryption key,
wherein the password information newly generated is transmitted to the destination.

6. A program causing a computer to function as:
a storage site information transmitter (140) that transmits storage site information representing a storage site of data to be encrypted to a certain destination of a person to which data is to be released, the certain destination being that of an unregistered user;
an access acceptor (150) that accepts an access accompanied with the storage site information; and
a password information transmitter (170) that transmits password information, in a case where the access accompanied with the storage site information is accepted, to the destination associated with the data, wherein the password information serves as a decryption key for decrypting the data to be encrypted after the data has been encrypted,
wherein the timing at which the password information for the data is transmitted comes after a certain period has elapsed since the timing at which the storage site information for the data is transmitted and wherein the timing at which the password information is transmitted is just after the timing at which the person to which data is to be released actually accesses the storage site of the data, so that the person to which data is to be released can specify the password information that is necessary to decrypt the encrypted data; the program further causing the computer to function as
a password information generator (160) that newly generates the password information in a case where the access accompanied with the storage site information is accepted, and
an encrypted data generator (210) that, in a case where the access accompanied with the storage site information is accepted and the password information generator (160) newly generates the password information, generates the encrypted data that is able to be decrypted by using the newly generated password information as a decryption key,
wherein the password information transmitter (170) transmits the password information newly generated by the password information generator to the destination.

## Patentansprüche

1. Datenübertragungssystem (1), umfassend:
einen Speicherstellen-Informationssender (140), welcher Speicherstelleninformationen, die eine Speicherstelle von zu verschlüsselnden Daten repräsentieren, an ein bestimmtes Ziel einer Person sendet, an welche Daten herauszugeben sind, wobei das bestimmte Ziel das eines unregistrierten Benutzers ist;
eine Zugriffsannahmeeinheit (150), welche einen Zugriff annimmt, der die Speicherstelleninformationen begleitet; und
einen Passwort-Informationssender (170), welcher in einem Fall, wenn der Zugriff angenommen wird, der die Speicherstelleninformationen begleitet, Passwortinformationen an das Ziel sendet, das den Daten zugeordnet ist, wobei die Passwortinformationen als ein Entschlüsselungsschlüssel zum Entschlüsseln der zu verschlüsselnden Daten dienen, nachdem die Daten verschlüsselt worden sind,
wobei die Zeit, zu der die Passwortinformationen für die Daten gesendet werden, nach Ablauf einer bestimmten Zeitperiode seit der Zeit liegt, zu der die Speicherstelleninformationen für die Daten gesendet werden, und wobei die Zeit, zu der die Passwortinformationen gesendet werden, direkt nach der Zeit liegt, zu der die Person, an welche die Daten herauszugeben sind, tatsächlich auf die Speicherstelle der Daten zugreift, so dass die Person, an welche die Daten herauszugeben sind, die Passwortinformationen spezifizieren kann, die notwendig sind, um die verschlüsselten Daten zu entschlüsseln; wobei das Datenübertragungssystem ferner umfasst:
einen Passwort-Informationsgenerator (160), welcher in einem Fall, wenn der Zugriff angenommen wird, der die Speicherstelleninformationen begleitet, die Passwortinformationen neu erzeugt, und
einen Generator für verschlüsselte Daten (210), welcher in einem Fall, wenn der Zugriff angenommen wird, der die Speicherstelleninformationen begleitet, und der Passwort-Informationsgenerator (160) die Passwortinformationen neu erzeugt, die verschlüsselten Daten erzeugt, die unter Verwendung der neu erzeugten Passwortinformationen als ein Entschlüsselungsschlüssel entschlüsselt werden können,
wobei der Passwort-Informationssender (170) die von dem Passwort-Informationsgenerator neu erzeugten Passwortinformationen an das Ziel sendet.

2. Datenübertragungssystem (1) nach Anspruch 1, wobei der Zugriff, der die Speicherstelleninformationen begleitet, ein Zugriff auf die Speicherstelleninformationen oder ein Zugriff auf eine Befehlseinheit ist, welche einen Befehl zum Erhalten der Daten unter Verwendung der Speicherstelleninformationen bereitstellt.

3. Datenübertragungssystem (1) nach Anspruch 1 oder 2, wobei
die Speicherstelleninformationen einen Uniform Resource Locator einer Website repräsentieren, welche eine Speicherstelle der Daten ist,
die Zugriffsannahmeeinheit (150) einen Zugriff auf die Website annimmt, und
der Passwort-Informationssender (170) in einem Fall, wenn der Zugriff auf die Website angenommen wird, Passwortinformationen zum Verwenden der Daten an das Ziel sendet.

4. Datenübertragungssystem (1) nach einem der Ansprüche 1 bis 3, wobei der Passwort-Informationssender (170) zusammen mit den Passwortinformationen Informationen an das Ziel sendet, welche ein Datum und eine Zeit repräsentieren, wann der Zugriff, der die Speicherstelleninformationen begleitet, angenommen wird.

5. Datenübertragungsverfahren, umfassend:
Senden (S105) von Speicherstelleninformationen, welche eine Speicherstelle von zu verschlüsselnden Daten repräsentieren, an ein bestimmtes Ziel einer Person, an welche Daten herauszugeben sind, wobei das bestimmte Ziel das eines unregistrierten Benutzers ist;
Annehmen (S108) eines Zugriffs, der die Speicherstelleninformationen begleitet; und
Senden (S110) von Passwortinformationen an das Ziel, das den Daten zugeordnet ist, in einem Fall, wenn der Zugriff angenommen wird, der die Speicherstelleninformationen begleitet, wobei die Passwortinformationen als ein Entschlüsselungsschlüssel zum Entschlüsseln der zu verschlüsselnden Daten dienen, nachdem die Daten verschlüsselt worden sind,
wobei die Zeit, zu der die Passwortinformationen für die Daten gesendet werden, nach Ablauf einer bestimmten Zeitperiode seit der Zeit liegt, zu der die Speicherstelleninformationen für die Daten gesendet werden, und wobei die Zeit, zu der die Passwortinformationen gesendet werden, direkt nach der Zeit liegt, zu der die Person, an welche die Daten herauszugeben sind, tatsächlich auf die Speicherstelle der Daten zugreift, so dass die Person, an welche die Daten herauszugeben sind, die Passwortinformationen spezifizieren kann, die notwendig sind, um die verschlüsselten Daten zu entschlüsseln; wobei das Verfahren ferner umfasst:
Neuerzeugen der Passwortinformationen in einem Fall, wenn der Zugriff angenommen wird, der die Speicherstelleninformationen begleitet, und
in einem Fall, wenn der Zugriff angenommen wird, der die Speicherstelleninformationen begleitet, und die Passwortinformationen neu erzeugt werden, Erzeugen der verschlüsselten Daten, die unter Verwendung der neu erzeugten Passwortinformationen als ein Entschlüsselungsschlüssel entschlüsselt werden können,
wobei die neu erzeugten Passwortinformationen an das Ziel gesendet werden.

6. Programm, welches bewirkt, dass ein Computer fungiert als:
ein Speicherstellen-Informationssender (140), welcher Speicherstelleninformationen, die eine Speicherstelle von zu verschlüsselnden Daten repräsentieren, an ein bestimmtes Ziel einer Person sendet, an welche Daten herauszugeben sind, wobei das bestimmte Ziel das eines unregistrierten Benutzers ist;
eine Zugriffsannahmeeinheit (150), welche einen Zugriff annimmt, der die Speicherstelleninformationen begleitet; und
ein Passwort-Informationssender (170), welcher in einem Fall, wenn der Zugriff angenommen wird, der die Speicherstelleninformationen begleitet, Passwortinformationen an das Ziel sendet, das den Daten zugeordnet ist, wobei die Passwortinformationen als ein Entschlüsselungsschlüssel zum Entschlüsseln der zu verschlüsselnden Daten dienen, nachdem die Daten verschlüsselt worden sind,
wobei die Zeit, zu der die Passwortinformationen für die Daten gesendet werden, nach Ablauf einer bestimmten Zeitperiode seit der Zeit liegt, zu der die Speicherstelleninformationen für die Daten gesendet werden, und wobei die Zeit, zu der die Passwortinformationen gesendet werden, direkt nach der Zeit liegt, zu der die Person, an welche die Daten herauszugeben sind, tatsächlich auf die Speicherstelle der Daten zugreift, so dass die Person, an welche die Daten herauszugeben sind, die Passwortinformationen spezifizieren kann, die notwendig sind, um die verschlüsselten Daten zu entschlüsseln; wobei das Programm ferner bewirkt, dass der Computer fungiert als
ein Passwort-Informationsgenerator (160), welcher in einem Fall, wenn der Zugriff angenommen wird, der die Speicherstelleninformationen begleitet, die Passwortinformationen neu erzeugt, und
ein Generator für verschlüsselte Daten (210), welcher in einem Fall, wenn der Zugriff angenommen wird, der die Speicherstelleninformationen begleitet, und der Passwort-Informationsgenerator (160) die Passwortinformationen neu erzeugt, die verschlüsselten Daten erzeugt, die unter Verwendung der neu erzeugten Passwortinformationen als ein Entschlüsselungsschlüssel entschlüsselt werden können,
wobei der Passwort-Informationssender (170) die von dem Passwort-Informationsgenerator neu erzeugten Passwortinformationen an das Ziel sendet.

## Revendications

1. Système de transmission de données (1) comprenant :
un émetteur d'informations de site de stockage (140) qui transmet des informations de site de stockage représentant un site de stockage de données à crypter à une certaine destination d'une personne à laquelle des données doivent être communiquées, la destination certaine étant celle d'un utilisateur non enregistré ;
un accepteur d'accès (150) qui accepte un accès accompagné des informations de site de stockage ; et
un émetteur d'informations de mot de passe (170) qui transmet des informations de mot de passe, dans un cas où l'accès accompagné des informations de site de stockage est accepté, à la destination associée aux données, dans lequel les informations de mot de passe servent de clé de décryptage pour décrypter les données à crypter après que les données ont été cryptées,
dans lequel le moment auquel les informations de mot de passe pour les données sont transmises vient après qu'une certaine période s'est écoulée depuis le moment auquel les informations de site de stockage pour les données sont transmises et dans lequel le moment auquel les informations de mot de passe sont transmises se situe juste après le moment auquel la personne à laquelle des données doivent être communiquées accède effectivement au site de stockage des données, de sorte que la personne à laquelle des données doivent être communiquées peut spécifier les informations de mot de passe qui sont nécessaires pour décrypter les données cryptées ; le système de transmission de données comprenant en outre :
un générateur d'informations de mot de passe (160) qui génère nouvellement les informations de mot de passe dans un cas où l'accès accompagné des informations de site de stockage est accepté, et
un générateur de données cryptées (210) qui, dans un cas où l'accès accompagné des informations de site de stockage est accepté et où le générateur d'informations de mot de passe (160) génère nouvellement les informations de mot de passe, génère les données cryptées qui peuvent être décryptées en utilisant les informations de mot de passe nouvellement générées en tant que clé de décryptage,
dans lequel l'émetteur d'informations de mot de passe (170) transmet les informations de mot de passe nouvellement générées par le générateur d'informations de mot de passe à la destination.

2. Système de transmission de données (1) selon la revendication 1, dans lequel l'accès accompagné des informations de site de stockage est un accès aux informations de site de stockage ou un accès à une unité d'instruction qui fournit une instruction pour obtenir les données en utilisant les informations de site de stockage.

3. Système de transmission de données (1) selon la revendication 1 ou 2, dans lequel
les informations de site de stockage représentent un localisateur de ressources uniforme d'un site Web qui est un site de stockage des données,
l'accepteur d'accès (150) accepte un accès au site Web, et
l'émetteur d'informations de mot de passe (170) transmet, dans un cas où l'accès au site Web est accepté, des informations de mot de passe pour utiliser les données à la destination.

4. Système de transmission de données (1) selon l'une quelconque des revendications 1 à 3, dans lequel l'émetteur d'informations de mot de passe (170) transmet, conjointement avec les informations de mot de passe, des informations représentant une date et une heure auxquelles est accepté l'accès accompagné des informations de site de stockage à la destination.

5. Procédé de transmission de données comprenant les étapes consistant à :
transmettre (S105) des informations de site de stockage représentant un site de stockage de données à crypter à une certaine destination d'une personne à laquelle des données doivent être communiquées, la certaine destination étant celle d'un utilisateur non enregistré ;
accepter (S108) un accès accompagné des informations de site de stockage ; et
transmettre (S110) des informations de mot de passe, dans un cas où l'accès accompagné des informations de site de stockage est accepté, à la destination associée aux données, dans lequel les informations de mot de passe servent de clé de décryptage pour décrypter les données à crypter après que les données ont été cryptées,
dans lequel le moment auquel les informations de mot de passe pour les données sont transmises vient après qu'une certaine période s'est écoulée depuis le moment auquel les informations de site de stockage pour les données sont transmises et dans lequel le moment auquel les informations de mot de passe sont transmises se situe juste après le moment auquel la personne à laquelle des données doivent être communiquées accède effectivement au site de stockage des données, de sorte que la personne à laquelle des données doivent être communiquées peut spécifier les informations de mot de passe qui sont nécessaires pour décrypter les données cryptées ; le procédé comprenant en outre les étapes consistant à :
générer nouvellement les informations de mot de passe dans un cas où l'accès accompagné des informations de site de stockage est accepté, et
dans un cas où l'accès accompagné des informations de site de stockage est accepté et où les informations de mot de passe sont nouvellement générées, générer les données cryptées qui peuvent être décryptées en utilisant les informations de mot de passe nouvellement générées en tant que clé de décryptage,
dans lequel les informations de mot de passe nouvellement générées sont transmises à la destination.

6. Programme amenant un ordinateur à fonctionner comme :
un émetteur d'informations de site de stockage (140) qui transmet des informations de site de stockage représentant un site de stockage de données à crypter à une certaine destination d'une personne à laquelle des données doivent être communiquées, la destination certaine étant celle d'un utilisateur non enregistré ;
un accepteur d'accès (150) qui accepte un accès accompagné des informations de site de stockage ; et
un émetteur d'informations de mot de passe (170) qui transmet des informations de mot de passe, dans un cas où l'accès accompagné des informations de site de stockage est accepté, à la destination associée aux données, dans lequel les informations de mot de passe servent de clé de décryptage pour décrypter les données à crypter après que les données ont été cryptées,
dans lequel le moment auquel les informations de mot de passe pour les données sont transmises vient après qu'une certaine période s'est écoulée depuis le moment auquel les informations de site de stockage pour les données sont transmises et dans lequel le moment auquel les informations de mot de passe sont transmises se situe juste après le moment auquel la personne à laquelle des données doivent être communiquées accède effectivement au site de stockage des données, de sorte que la personne à laquelle des données doivent être communiquées peut spécifier les informations de mot de passe qui sont nécessaires pour décrypter les données cryptées ; le programme amenant en outre l'ordinateur à fonctionner comme
un générateur d'informations de mot de passe (160) qui génère nouvellement les informations de mot de passe dans un cas où l'accès accompagné des informations de site de stockage est accepté, et
un générateur de données cryptées (210) qui, dans un cas où l'accès accompagné des informations de site de stockage est accepté et où le générateur d'informations de mot de passe (160) génère nouvellement les informations de mot de passe, génère les données cryptées qui peuvent être décryptées en utilisant les informations de mot de passe nouvellement générées en tant que clé de décryptage,
dans lequel l'émetteur d'informations de mot de passe (170) transmet les informations de mot de passe nouvellement générées par le générateur d'informations de mot de passe à la destination.
